# EUROPÄISCHE PATENTANMELDUNG

(11) **EP 1 063 601 A2**
(43) Veröffentlichungstag der Anmeldung: **27.12.2000**
(21) Anmeldenummer: 00110575.8
(22) Anmeldetag: 18.05.2000
(51) Int. Cl.: G06F 17/60

(54) **Verfahren und System zur automatisierten Überwachung von Warenflüssen**

(30) Priorität: 22.06.1999 DE 19928531
(71) Anmelder: Deutsche Telekom AG, 53113 Bonn (DE)
(72) Erfinder: Heintz, Thomas, 48565 Steinfurt (DE); Rass, Carsten, 44309 Dortmund (DE); Neteler, Wolfgang, 59348 Lüdinghausen (DE); Weyer, Antje, 48153 Münster (DE)

(57) **Zusammenfassung**

Die Erfindung betrifft ein Verfahren und ein System zur automatisierten Überwachung von Warenflüssen und Warenständen.

Dazu werden erste Informationen über die zu transportierenden Waren an einem Ursprungsort (10) erfasst. Die erfassten ersten Informationen sowie eine Ortsangabe des Ursprungs- und/oder wenigstens eines Destimmungsortes werden von einer dem Ursprungsort zugeordneten lokalen Überwachungseinrichtung (15) zu wenigstens einer zentralen Einrichtung (50) übertragen und dort gespeichert. Eine Übergabe der zu transportierenden Waren an wenigstens ein erstes Transportmittel (20, 30) wird der zentralen Einrichtung (50) signalisiert. Danach werden zweite Informationen über am Bestimmungsort (40) angekommene Waren erfaßt, die von einer dem Bestimmungsort zugeordneten lokalen Überwachungseinrichtung (15) zur zentralen Einrichtung (50) übertragen und dort gespeichert werden.

## Beschreibung

Die Erfindung betrifft ein Verfahren sowie ein System zur automatisierten Überwachung von Warenflüssen, insbesondere von Kühl- und Tiefkühlwaren.

Durch die 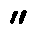 erste Verordnung zur Änderung der Verordnung über tiefgefrorene Lebensmittel" (Richtlinie 92/1/EWG vom 13.1.1992 zur Überwachung der Temperaturen von tiefgefrorenen Lebensmittel in Beförderungsmitteln sowie Einlagerungs- und Lagereinrichtungen; Richtlinie 92/2/EWG vorn 13.1.1992 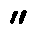 zur Festlegung des Probenahmeverfahrens und des gemeinschaftlichen Analyseverfahrens für die amtliche Kontrolle der Temperaturen von tiefgefrorenen Lebensmitteln") ist der Transport und die Lagerung von tiefgefrorenen Lebensmitteln nachweispflichtig.

Der Erfindung liegt nunmehr die Aufgabe zugrunde, ein Verfahren und ein System bereitzustellen, mit dem die Überwachung von Warenflüssen, insbesondere von Kühl- und Tiefkühlwaren automatisiert erfolgen kann.

Der Kerngedanke der Erfindung ist darin zusehen, lokale Überwachungseinrichtungen am Ursprungsort der zu transportierenden Waren, am Bestimmungsort, gegebenenfalls an Zwischenlagern und in den die Waren transportierenden Transportmitteln anzuordnen, die die notwendigen Daten mit einer zentralen Einrichtung über Funk- oder Leitungsverbindungen austauschen können. Sowohl bei den lokalen Überwachungseinrichtungen als auch bei der zentralen Einrichtung handelt es sich vorzugsweise um entsprechend ausgestattete Computersysteme.

Das technische Problem der Erfindung wird zum einen durch die Verfahrensschritte des Anspruchs 1 gelöst.

Insbesondere wird ein Verfahren zur automatisierten Überwachung von Warenflüssen, insbesondere von Kühl- und Tiefkühlwaren zur Verfügung gestellt, nach dem zunächst erste Informationen über die zu transportierenden Waren an einem Ursprungsort erfaßt werden. Anschließend werden die erfaßten ersten Informationen sowie eine Ortsangabe des Ursprungs- und/oder wenigstens eines Bestimmungsortes von einer dem Ursprungsort zugeordneten lokalen Überwachungseinrichtung zu wenigstens einer zentralen Einrichtung übertragen und in einem der zentralen Einrichtung zugeordneten Speichermedium gespeichert. Werden die Waren wenigstens einem ersten Transportmittel übergeben, dann wird der zentralen Einrichtung diese Übergabe signalisiert. Am Bestimmungsort werden zweite Informationen über die dort angekommenen Waren erfaßt und von einer dem Bestimmungsort zugeordneten lokalen Überwachungseinrichtung zur zentralen Einrichtung übertragen und ebenfalls im Speichermedium gespeichert. Auf diese Weise kann der gesamte Transportweg der Waren vom Ursprungsort, über ein oder mehrere Transportmittel, gegebenenfalls über ein oder mehrere Zwischenlager bis hin zum Bestimmungsort automatisch überwacht und protokolliert werden.

Vorteilhafte Weiterbildungen sind Gegenstand der Unteransprüche 2 bis 10.

Um den Übergang der zu transportierenden Waren vom Ursprungsort zum ersten Transportmittel protokollieren zu können, werden die zu transportierenden Waren aus der dem Ursprungsort zugeordneten lokalen Überwachungseinrichtung zunächst ausgebucht. Anschließende werden dritte Informationen über die zu transportierenden Waren in wenigstens dem einen ersten Transportmittel erfaßt. Die dritten Informationen sowie vorbestimmte Kenndaten des Transportmittels, insbesondere das Kennzeichen und die Adresse der Spedition, werden über eine dem Transportmittel zugeordnete lokale Überwachungseinrichtung zur zentralen Einrichtung übertragen. Zusätzlich können diese Informationen auch in der dem ersten Transportmittel zugeordneten lokalen Überwachungseinrichtung gespeichert werden.

Die ersten, zweiten und/oder dritten Informationen werden kontinuierlich oder zu vorbestimmten Zeitpunkten erfasst, in den jeweiligen lokalen Überwachungseinrichtungen gespeichert und im Online- bzw. Offline-Modus zur zentralen Einrichtung übertragen.

Die ersten und zweiten Informationen enthalten beispielsweise eine Zeit für das Ein- und Ausbuchen an der jeweiligen lokalen Einrichtung, die aktuelle Zeit, sowie Art, Menge und die aktuelle Umgebungstemperatur der zu transportierenden Waren. Die aktuelle Umgebungstemperatur entspricht hierbei beispielsweise der Innentemperatur eines Kühllagers oder der Innentemperatur eines Kühlkontainers auf dem Transportmittels. Diese Informationen dienen dazu, den Transportweg der zu transportierenden Waren, die Aufenthaltsdauer der zu transportierenden Waren am Ursprungsort, in den Transportmitteln und am Bestimmungsort sowie die aktuelle Umgebungstemperatur als auch den zeitlichen Verlauf (Historie) der Umgebungstemperatur der Waren zu jedem Zeitpunkt präzise nachweisen und protokollieren zu können.

Die für das Transportmittel erfassten dritten Informationen enthalten darüber hinaus noch den augenblicklichen Aufenthaltsort des Transportmittels, so daß eine Steuerung und Überwachung des Transportmittels von der zentralen Einrichtung aus möglich ist, an die alle erfassten Informationen weitergeleitet werden.

Um zu vermeiden, daß die Umgebungstemperatur der zu transportierenden Waren zu warm oder zu kalt wird, wird die aktuelle Umgebungstemperatur mit einem vorbestimmten Sollwert verglichen. Beim Abweichen der aktuellen Umgebungstemperatur vom Sollwert wird wenigstens eine vorbestimmte Sicherheitsfunktion ausgelöst. Mögliche Sicherheitsfunktionen sind beispielsweise das Signalisieren einer Störung an der zentralen Einrichtung, an der entsprechenden lokalen Überwachungseinrichtung oder beispielsweise das Steuern einer der entsprechenden lokalen Überwachungseinrichtung zugeordneten Klimaanlage.

Das Abweichen der aktuellen Umgebungstemperatur vom Sollwert und das Auslösen einer vorbestimmten Sicherheitsfunktion wird in der jeweiligen lokalen Überwachungseinrichtung und/oder in der zentralen Einrichtung protokolliert. Auf diese Weise kann beispielsweise später festgestellt werden, in wessen Verantwortungsbereich die zu transportierenden Waren verdorben sind.

Nicht nur Zustandsdaten über die zu transportierenden Waren sondern auch über Gebäude oder Lagerhallen am Ursprungsort, am Bestimmungsort und über das Transportmittel selbst können erfasst und in der jeweiligen lokalen Überwachungseinrichtung und/oder in der zentralen Einrichtung ausgewertet werden. Beispielsweise ist es denkbar, die lokale Überwachungseinrichtung mit einer an sich bekannten Gebäudesteuer- und Überwachungseinrichtung (Gebäudeleittechnik) zu verbinden.

Um beispielsweise eine Eigentumsübergabe der zu transportierenden Waren von dem Transportmittel einer Spedition auf das Transportmittel einer anderen Spedition automatisiert durchführen zu können, werden zunächst die zu transportierenden Waren aus der lokalen Überwachungseinrichtung des ersten Transportmittels ausgebucht. Die Ausbuchungszeit wird dann in der lokalen Überwachungseinrichtung gespeichert und zur zentralen Einrichtung übertragen. Anschließend werden vierte Informationen über die zu transportierenden Waren in wenigstens dem einen weiteren Transportmittel erfasst und zusammen mit vorbestimmten Kenndaten des weiteren Transportmittels über eine dem weiteren Transportmittel zugeordnete lokale Überwachungseinrichtung zur zentralen Einrichtung übertragen. Abschließend wird die Übergabe der zu transportierenden Waren vom ersten zum weiteren Transportmittel in der lokalen Überwachungseinrichtung des ersten und des weiteren Transportmittels und/oder in der zentralen Einrichtung protokolliert.

Die in der zentralen Einrichtung gespeicherten Informationendaten können auf einer Anzeigeeinrichtung dargestellt werden. Beispielsweise wird hierzu eine interaktive Oberfläche benutzt. Auf diese Weise kann jederzeit der Standort des Transportmittels ermittelt werden und bei Bedarf ist eine Navigationshilfe zu jedem Aufenthaltsort möglich.

Das technische Problem der Erfindung wird ebenfalls durch die Merkmale des Anspruchs 11 gelöst.

Danach ist ein System, insbesondere zur Durchführung des Verfahrens zur automatisierten Überwachung von Warenflüssen vorgesehen. Das System umfasst eine erste, einem Ursprungsort zugeordnete lokale Überwachungseinrichtung, wenigstens eine zweite lokale Überwachungseinrichtung, die einem Bestimmungsort zugeordnet ist, wenigstens eine dritte lokale Überwachungseinrichtung, wobei jeder dritten lokalen Überwachungseinrichtung ein Transportmittel zugeordnet ist, sowie wenigstens eine zentrale Einrichtung, die mit den lokalen Überwachungseinrichtungen insbesondere zum Austausch von Daten und Befehlen verbunden ist. Jede lokale Überwachungseinrichtung weist eine Sende-/Empfangseinrichtung und einen Speicher auf. Weiterhin ist jede lokale Überwachungseinrichtung mit wenigstens einem Detektor zum Erfassen einer vorbestimmten Information über die zu transportierenden und/oder an einem Bestimmungsort angekommenen Waren verbunden. Der zentralen Einrichtung ist eine Sende-/Empfangseinrichtung sowie ein Speicher zugeordnet, in dem die von den lokalen Überwachungseinrichtungen kommenden Informationen gespeichert werden können.

Vorteilhafte Weiterbildungen des Systems sind Gegenstand der Unteransprüche 12 bis 16.

Insbesondere ist jeder lokalen Überwachungseinrichtung ein Temperatur-Meßfühler zum Ermitteln der Umgebungstemperatur der Waren sowie eine Leseeinrichtung zum Erkennen der Art und Menge der Waren zugeordnet.

Der lokalen Überwachungseinrichtung des Transportmittels ist ferner ein Funk-Empfänger, insbesondere ein GPS-Empfänger, zur Bestimmung des augenblicklichen Aufenthaltsortes des Transportmittels zugeordnet. Da der augenblickliche Aufenthaltsort des Transportmittels zur zentralen Einrichtung übertragen wird, kann beispielsweise über eine grafische, interaktive Oberfläche der Standort des Transportmittels jederzeit festgestellt werden.

Um zu verhindern, daß die zu transportierenden Waren unterwegs infolge zu hoher oder zu niedriger Umgebungstemperaturen verderben, ist jede lokale Überwachungseinrichtung und/oder die zentrale Einrichtung zum Vergleichen der gemessenen Umgebungstemperatur mit einem vorbestimmten Sollwert ausgebildet. Beispielsweise sorgt die jeweilige lokale Überwachungseinrichtung unter Ansprechen auf ein Abweichen der aktuellen Umgebungstemperatur vom Sollwert dafür, daß eine vorbestimmte Sicherheitsfunktion ausgelöst wird. Beispielsweise wird eine Klimaanlage aktiviert.

Hierzu ist es notwendig, daß jeder lokalen Überwachungseinrichtung wenigstens ein Aktor zum Auslösen einer vorbestimmten Funktion zugeordnet ist.

Jede lokale Überwachungseinrichtung aktiviert die ihr zugeordneten Detektoren zu vorbestimmten Zeiten oder kontinuierlich und legt die erfassten Daten im jeweiligen Speicher ab. Ferner werden die Daten zur zentralen Einrichtung übertragen.

Die erste und zweite lokale Überwachungseinrichtung weist ferner eine Schnittstelle auf, an die eine herkömmliche Gebäudesteuer- und Überwachungseinrichtung angeschaltet werden kann.

Um aktiv in die Überwachung des Warenflusses eingreifen zu können, ist jeder lokalen Überwachungseinrichtung und der zentralen Einrichtung eine Ausgabeeinrichtung, ein Display sowie ein Bedienfeld zugeordnet.

Die Erfindung wird nachfolgend anhand eines Ausführungsbeispiels in Verbindung mit den beiliegenden Zeichnungen näher erläutert.
Darin zeigen:
- Fig. 1: ein beispielhaftes Überwachungssystem,
- Fig. 2: ein schematisches Blockschaltbild einer lokalen Überwachungseinrichtung, die jeweils im Kühllager am Ursprungs- und Zielort nach Fig. 1 implementiert ist,
- Fig. 3: ein schematisches Blockschaltbild einer lokalen Überwachungseinrichtung, die in jedem Transportmittel nach Fig. 1 enthalten ist,
- Fig. 4: ein schematisches Blockschaltbild einer zentralen Einrichtung.

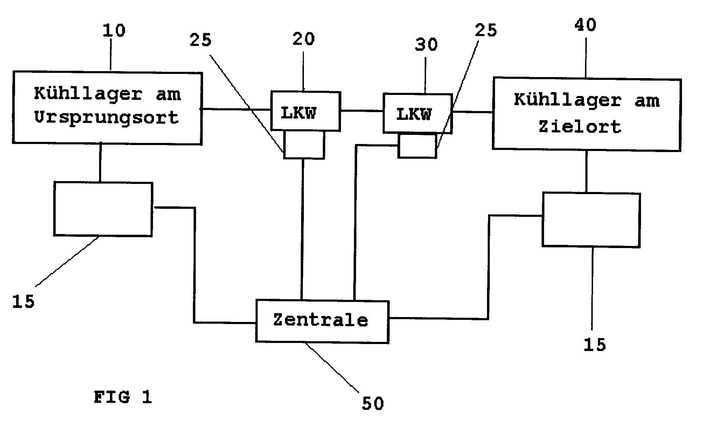

Kühl- und Tiefkühlprodukte werden üblicherweise in einem Kühllager 10 am Ort der Produktionsstätte gelagert, bis sie über ein oder mehrere Transportmittel 20 und 30, ggfs. über Zwischenlagerungen zu einem Kühllager 40 am Zielort gebracht werden. Eine solche Transportkette ist beispielhaft in Fig. 1 dargestellt. Den Kühllagern 10 und 40 am Urprungs- und Zielort ist jeweils eine lokale Überwachungseinrichtung 15 zugeordnet, wohingegen den Transportmitteln 20 und 30 jeweils eine lokale Überwachungseinrichtung 25 zugeordnet ist. Die lokalen Überwachungseinrichtungen 15 sind über Funk- oder Leitungsverbindungen und die lokalen Überwachungseinrichtungen 25 über Funkverbindungen mit einer zentralen Einrichtung 50 verbunden.

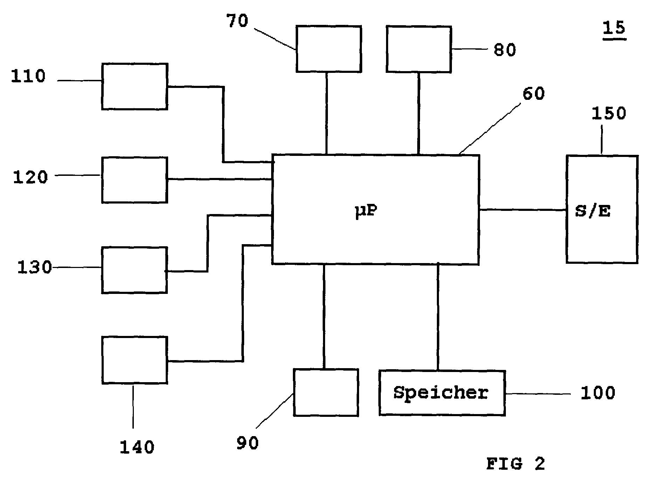

Fig. 2 zeigt ein detailliertes Blockschaltbild der lokalen Überwachungseinrichtung 15, von der jeweils eine dem Kühllager 10 und dem Kühllager 40 zugeordnet ist. Die lokale Überwachungseinrichtung 15 wird nachfolgend nur für das Kühllager 10 näher beschrieben. Sie weist eine Steuereinheit 60 auf, die mit einer Anzeigefläche 70, einer Ausgabeeinheit 80, einem Bedienfeld 90 sowie einem Speicher 100 verbunden ist. Darüber hinaus ist die Steuereinheit 60 mit wenigstens einem Temperatur-Meßfühler 110 verbunden, der an einer Stelle des Kühllagers 10 zur Messung der Innentemperatur angebracht ist. Die zu vorbestimmten Zeitpunkten oder kontinuierlich gemessenen Temperaturen werden im Speicher 100 abgelegt und sind somit lokal abrufbar. Ferner ist an die Steuereinheit 60 beispielsweise ein Barcode-Leser 120 angeschaltet, mit dem Art und Menge der zu transportierenden Kühlprodukte erfasst werden. Die vom Barcode-Leser 120 erfassten Daten werden ebenfalls im Speicher 100 abgelegt. Beispielsweise ist ein Sensor 130 zur Überwachung einer Klimaanlage und ein Sensor 140 zur Überwachung einer Tür des Kühllagers 10 mit der Steuereinheit 60 verbunden. Weitere Sensoren, beispielsweise zur Überwachung von Motoren, des Füllstandes u.s.w. können vorgesehen sein. Auch die von den Sensoren 130 und 140 erfassten Daten werden im Speicher 100 abgelegt. Um die Klimaanlage und die Tür steuern zu können, sind entsprechende Aktoren vorgesehen, die von der Steuereinheit 60 oder der zentralen Einrichtung 50 über die Steuereinheit 60 angesteuert werden können.

Die lokale Überwachungseinrichtung 15 verfügt ferner eine Sende-/Empfangseinrichtung 150, über die alle in der lokalen Überwachungseinrichtung 15 zur Verfügung stehenden Informationen zur zentralen Einrichtung 50 übertragen werden können. Der Kommunikationsaustausch mit der zentralen Einrichtung 50 kann per Funk, über eine Telefonleitung unter Nutzung der ISDN- oder bekannter Modem-Techniken, über Verbindungen basierend auf einer bekannten Inter-/Intranet-Technik, über Breitbandkabel oder Stromleitungen erfolgen.

Um ein Verderben der Kühlprodukte im Kühllager 10 verhindern zu können, wird die Temperatur im Kühllager 10 mit einem vorbestimmten Sollwert in der Steuereinheit 60 verglichen. Beim Überschreiten der Solltemperatur veranlasst die Steuereinheit 60 die Klimaanlage über den Aktor, die Temperatur zu senken. Das Überschreiten des Sollwertes und das Absenken der Temperatur meldet die Steuereinheit 60 der zentralen Einrichtung 50. Die zentrale Einrichtung 50 ist derart ausgebildet, daß sie auch selbst die Temperaturen der Kühllager 10 und 40 mit einem Sollwert vergleichen und beim Überschreiten des Soliwertes den Aktor zur Steuerung der Klimaanlage ansteuern kann. Vorzugsweise wird jeder Störfall von der lokalen Überwachungseinrichtung 15 der zentralen Einrichtung 50 gemeldet.

An die Steuereinheit. 60 kann zusätzlich noch eine allgemein bekannte Einrichtung zur Überwachung und Steuerung von Gebäuden (Gebäudeleittechnik) angeschaltet werden.

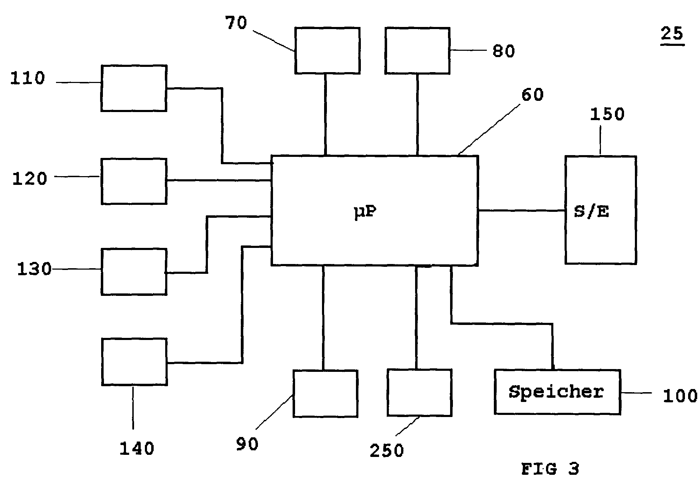

Fig. 3 zeigt ein detailliertes Blockschaltbild der lokalen Überwachungseinrichtung 25, von der jeweils eine am Transportmittel 20 und am Transportmittel 30 angeordnet ist. Bei den Transportmitteln handelt es sich beispielsweis um LKWs mit montiertem Kühlkontainer. Da der Aufbau und die Funktionsweise der lokalen Überwachungseinrichtung 25 im wesentlichen dem Aufbau und der Funktionsweise der lokalen Überwachungseinrichtung 15 entsprechen, werden im nachfolgenden nur die Unterschiede zwischen beiden lokalen Überwachungseinrichtungen beschrieben. So weist die lokale Überwachungseinrichtung 25 zusätzlich einen Funkempfänger 250, beispielsweise einen GPS-Empfänger auf, mit dessen Hilfe der Aufenthaltsort des Transportmittels zu jeder Zeit ermittelt werden kann. Der Kommunikationsaustausch mit der zentralen Einrichtung 50 erfolgt über eine Funkverbindung. Hierzu weist die lokale Überwachungseinrichtung 25 einen Funk-Sender-/Empfänger 150 auf. Wie bei der lokalen Überwachungseinrichtung 15 werden insbesondere die Zeit, die Temperatur eines auf dem LKW montierten Kühlkontainers, Art und Menge der zu transportierenden Kühlprodukte und zusätzlich der Aufenthaltsort des jeweiligen LKWs kontinuierlich oder zu bestimmten Zeitpunkten abgespeichert und im Online- bzw. Offline Modus zur zentralen Einrichtung 50 übertragen. Im Speicher 100 jeder lokalen Überwachungseinrichtung 25 und/oder in der zentralen Einrichtung 50 liegen nicht nur die aktuellen Informationen sondern auch die Historie der Informationen abrufbereit vor.

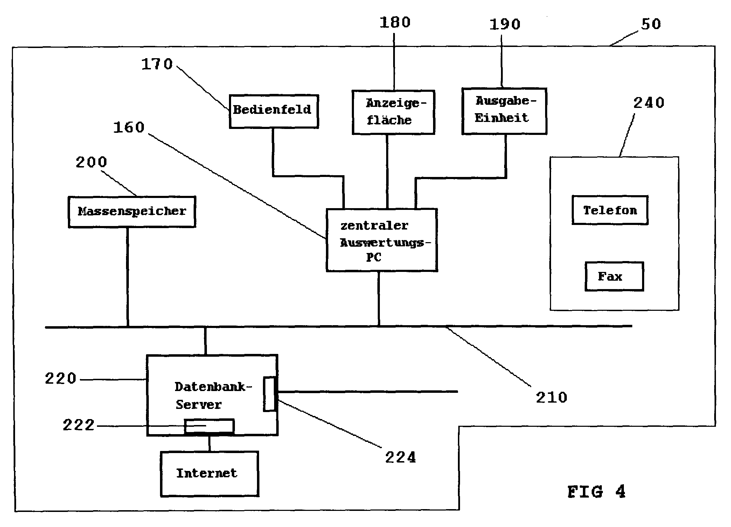

Fig. 4 zeigt die zentrale Einrichtung 50, die als Kernstück eine Steuer- und Auswerteeinrichtung 160 enthält. Die Steuer- und Auswerteeinrichtung 160 ist direkt mit einem Bedienfeld 170, einem interaktiven Display 180 und einem Drucker 190 verbunden. Ein Speicher 200 ist beispielsweise über einen Datenbus 210 mit der Steuer- und Auswerteeinrichtung 160 verbunden. An den Datenbus 210 kann ein Datenbankserver 220 angeschaltet sein, mit dessen Hilfe von außerhalb auf den Inhalt des Speichers 200 zugegriffen werden kann. Der Datenserver 220 besitzt zum Beispiel eine Schnittstelle 222 für einen Intranet- oder Internetzugang sowie wenigstens eine Schnittstelle 224. Im Speicher 200 werden alle von den lokalen Überwachungseinrichtungen 15 und 25 bereitgestellten Daten abgelegt und protokolliert. Diese Daten enthalten beispielsweise die Ortskoordinaten des Kühllagers 10 und des Kühllagers 40, die Kennzeichen der LKWS und die Adressen der jeweiligen Speditionen, den Aufenthaltsort der LKWS sowie die von den LKWs 20 und 30 zurückgelegten Wegstrecken und die Umgebungstemperatur der Kühlprodukte zu jedem Zeitpunkt und an jedem Aufenthaltsort.

Die Steuer- und Auswerteeinrichtung 160 kann beispielsweise die von allen Temperatur-Meßfühlern 110 gemessenen Temperaturen mit einem Sollwert vergleichen und bei Feststellung einer Abweichung vom Sollwert eine Sicherheitsfunktion über die entsprechende lokale Überwachungseinrichtung auslösen. Die Steuer- und Auswerteeinrichtung 160 kann die im Speicher 200 abgelegten Daten auf dem interaktiven Display 180 darstellen. Hierduch kann beispielsweise jederzeit der Aufenthaltsort der LKWs 20, 30 ermittelt werden und bei Bedarf ist eine Navigation der LKWs möglich. Der Abruf einzelner Daten sowie der Historie von Daten über das Display 180 ist ebenfalls möglich, so daß eine Kontrolle und Verfolgung der Waren und des Auslieferungsortes ohne dezidierte Datenbankkenntnisse möglich ist. Das Einblenden anderer Daten in das Display 180 (z. B. Reparaturservice für LKW's, Standorte von Filialen) ist ebenso möglich. Es sein angemerkt, daß in der zentralen Einrichtung 50 ein Operator-Platz 240 mit Telefon und Faxgerät vorgesehen sein kann.

Nachfolgend wird die Funktionsweise des in Fig. 1 gezeigten Überwachungssystems näher erläutert. Zunächst sei angenommen, daß tiefgekühlte Lebensmittel von dem Kühllager 10 zum Kühllager 40 transportiert werden solllen. Dazu werden zunächst über den Barcode-Leser 120 der lokalen Überwachungseinrichtung 15 Art und Menge der zu transportierenden Lebensmittel erfasst, die im Speicher 100 abgelegt und zum Speicher 200 der zentralen Eoinrichtung 50 übertragen werden. Der Temperatur-Meßfühler 110 mißt beispielsweise kontinuierlich die Temperatur im Kühllager 10 und übermittelt die Meßdaten dem Speicher 100 sowie dem Speicher 200 der zentralen Einrichtung 50. Darüber hinaus übermittelt die lokale Überwachungnseinrichtung 10 die Ortskoordinaten des Kühllagers 10 (Ursprungsort) und des Kühllagers 40 (Zielort) zur zentralen Einrichtung 50. Dort werden die Daten im Speicher 200 abgelegt.

Die Steuereinheit 60 vergleicht kontinuierlich die gemessene Temperatur des Kühllagers 10 mit einem Sollwert. Überschreitet die gemessene Temperatur den Sollwert, so werden das Überschreiten des Soliwertes und der dazugehörende Zeitpunkt im Speicher 100 der lokalen Überwachungseinrichtung 15 gespeichert und zum Speicher 200 der zentralen Einrichtung übertragen. Daraufhin veranlasst die Steuereinheit 60 oder die Steuer- und Auswerteeinrichtung 160 über die Steuereinheit 60 die Klimaanlage, die Temperatur automatisch um einen vorbestimmten Betrag zu senken. Auch dieser Vorgang wird im Speicher 100 der lokalen Überwachungseinrichtung 15 und im Speicher 200 der zentralen Einrichtung 50 unter Angabe der genauen Zeit protokolliert. Alternativ kann eine Bedienperson akustisch oder optisch dazu aufgefordert werden, die Klimaanlage entsprechend einzustellen. Es sei nunmehr angenommen, daß die zu transportierenden Lebensmittel aus dem Kühllager 10 des Produzenten in einen Behälter auf dem LKW 20 umgeladen werden sollen. Um den Übergang der zu transportierenden Lebensmittel aus dem Verantwortungsbereich des Produzenten in den Verantwortungsbereich der Spedition des LKWs 20 präzise in der zentralen Einrichtung 50 dokumentieren zu können, werden zunächst die zu transportierenden Lebensmittel aus der lokalen Überwachungseinrichung 15 ausgebucht. Hierzu wird der Ausbuchungszeitpunkt im Speicher 100 der lokalen Überwachungseinrichtung 15 abgelegt, zur zentralen Einrichtung 50 übertragen und dort in den Speicher 200 abgelegt. Anschließend werden die zu transportierenden Lebensmittel an der lokalen Überwachungseinrichtung 25 des LKWs 20 eingebucht, indem mittels des Barcodelesers 120 Art und Menge der in den LKW 20 umgeladenen Lebensmittel erfasst werden. Die Zeit des Einbuchens sowie die vom Barcodeleser 120 erfassten Daten werden im Speicher 100 der lokalen Überwachungseinrichtung 25 des LKW's 20 und im Speicher 200 der zentralen Einrichtung 50 abgelegt. Während der Fahrt ermittelt der GPS-Empfänger 250 beispielsweise kontinuierlich den Aufenthaltsort des LKW's 20. Die ermittelten Aufenthaltsorte und die dazugehörenden Zeitpunkte werden wiederum im Speicher 100 der lokalen Überwachungseinrichtung 25 des LKWs 20 und in dem Speicher 200 der zentralen Einrichtung 50 abgelegt. Auf diese Weise kann auf dem Display 180 der zentralen Einrichtung 50 der Transportweg des LKW's 20 zu jedem Zeitpunkt verfolgt werden. Während der Fahrt überwachen die Sensoren 110, 130 und 140 die Temperatur des Kontainers auf dem LKW 20, die Klimaanlage bzw. die Tür des Kontainers. Die gemessene Raumtemperatur des Kontainers wird zudem regelmäßig mit einem Sollwert verglichen. Die von den Sensoren erfassten Daten werden wiederum im Speicher 100 der lokalen Überwachungseinrichtung 25 des LKWs 20 und im Speicher 200 der zenztralen Einrichtung 50 abgelegt. Somit liegen hinsichtlich des LKWs 20 alle für die amtliche Kontrolle der Temperaturen der transportierten Lebensmitteln erforderlichen Daten abrufbar im Speicher 100 der lokalen Überwachungseinrichtung 25 des LKWs 20 und im Speicher 200 der zentralen Einrichtung 50 vor.

Es sei nunmehr angenommen, daß die zu transportierenden Lebensmittel an einem vorbestimmten Ort, der ebenfalls in der zentralen Einrichtung 20 hinterlegt ist, an den LKW 30 einer anderen Spedition übergeben werden sollen. Hierzu werden die vom LKW 20 transportierten Lebensmittel zunächst aus der lokalen Überwachungseinrichtung 25 ausgebucht. Der Ausbuchungsvorgang und der Zeitpunkt des Ausbuchens werden wiederum im Speicher 100 der lokalen Überwachungseinrichtung 25 des LKWs 20 und im Speicher 200 der zentralen Einrichtung 50 abgelegt. Gleichzeitig wird der aktuelle Aufenthaltsort als Übergabeort zur zentralen Einrichtung 50 übertragen. Anschließend werden Art und Menge der umgeladenen Lebensmittel vom Barcode-Leser 120 der lokalen Überwachungseinrichtung 25 des zweiten LKW's 30 erfasst und zusammen mit dem gemessenen Übergabezeitpunkt, dem Kennzeichen des zweiten LKW's 30 und der Adresse der Spedition im Speicher 100 der lokalen Überwachungseinrichtung 25 des LKWs 30 und im Speicher 200 der zentralen Einrichtung 50 abgelegt. Auf diese Weise ist es möglich, den genauen Übergabezeitpunkt, den Übergabeort als auch die übergebenen Lebensmittel zu identifizieren. Wie beim LKW 20 werden nunmehr regelmäßig die Raumtemperatur des auf dem LKW 30 montierten Kontainers gemessen und mit einem Sollwert verglichen sowie die Klimaanlage und die den Kontainer verschließende Tür überwacht. Die von den Sensoren 110, 130 und 140 erfassten Daten werden im Speicher 100 der lokalen Überwachungseinrichtung 25 des zweiten LKW's 30 abgelegt und zur zentralen Steuereinrichtung 50 übertragen. Dort werden die Daten im Speicher 200 abgelegt.

Am Zielort werden die Lebensmittel vom LKW 30 abgeladen und in dem Kühllager 40 gelagert. Die Umladung der Lebensmittel vom LKW 30 ins Kühllager 40 wird wiederum automatisch überwacht. Dazu werden zunächst die Lebensmittel an der lokalen Überwachungseinrichtung 25 des LKWs 30 ausgebucht und die Zeit des Ausbuchens im Speicher 100 der lokalen Überwachungsenrichtung 25 des LKWs 30 abgelegt und zur zentralen Einrichtung 50 übertragen. Anschließend werden Art und Menge der vom LKW 30 in das Kühllager 40 umgeladenen Lebensmittel vom Barcode-Leser 120 der dem Kühllager 40 zugeordneten lokalen Überwachungseinrichtung 15 erfasst. Diese Daten werden zusammen mit dem Einbuchungszeitpunkt im Speicher 100 der dem Kühllager 40 zugeordneten lokalen Überwachungseinrichtung 15 abgelegt und zur zentralen Einrichtung 50 übertragen. Durch einen Vergleich der Art und Menge der Lebensmittel, die das Kühllager 10 verlassen haben, mit der Art und Menge der Lebensmittel, die im Kühllager 40 angekommen sind, kann die zentrale Einrichtung 50 beispielsweise den Verlust von Lebensmitteln auf der Transportstrecke feststellen.

Während der Lagerung der Lebensmittel im Kühllager 40 werden regelmäßig die Raumtemperatur des Kühllagers 40 gemessen und mit einem Sollwert verglichen, sowie die Klimaanlage und die das Kühllager 40 verschließende Tür überwacht. Die von den Sensoren 110, 130 und 140 erfassten Daten werden im Speicher 100 der dem Kühllager 40 zugeordneten lokalen Überwachungseinrichtung 15 abgelegt und zur zentralen Steuereinrichtung 50 übertragen. Dort werden die Daten im Speicher 200 abgelegt.

Durch das Implementieren der lokalen Überwachungseinrichtungen 15 und 25 im Kühllager 10, in den LKWs 20 und 30 und im Kühllager 40 und durch Übermittlung der wesentlichen Daten zur zentralen Einrichtung 50 ist es möglich, den Kühlketten-Prozess vom Ursprungsort bis zum Zielort zu jedem Zeitpunkt automatisch zentral zu überwachen und zu protokollieren. Es können auch mehrere zentrale Einrichtungen zusammenwirken. Im Bedarfsfall kann dann eine der zentralen Einrichtungen als Hauptzentrale fungieren.

## Patentansprüche

1. Verfahren zur automatisierten Überwachung von Warenflüssen, insbesondere von Kühl- und Tiefkühlwaren, mit folgenden Verfahrensschritten:
a) Erfassen erster Informationen über die zu transportierenden Waren an einem Ursprungsort (10);
b) die erfassten ersten Informationen und eine Ortsangabe des Ursprungs- und/oder wenigstens eines Bestimmungsortes werden von einer dem Ursprungsort (10) zugeordneten lokalen Überwachungseinrichtung (15) zu wenigstens einer zentralen Einrichtung (50) übertragen und dort gespeichert;
c) der zentralen Einrichtung (50) wird eine Übergabe der zu transportierenden Waren an wenigstens ein erstes Transportmittel (20) signalisiert;
d) Erfassen zweiter Informationen über am Bestimmungsort (40) angekommene Waren;
e) die erfassten zweiten Informationen werden von einer dem Bestimmungsort zugeordneten lokalen Überwachungseinrichtung (15) zur zentralen Einrichtung (50) übertragen und dort zur weiteren Auswertung gespeichert.

2. Verfahren nach Anspruch 1,
dadurch gekennzeichnet, daß der Signalisierungsschritt c) folgende Schritte umfasst:
Ausbuchen der zu transportierenden Waren aus der dem Ursprungsort (10) zugeordneten lokalen Überwachungseinrichtung (15),
Erfassen dritter Informationen über die zu transportierenden Waren in wenigstens dem einen ersten Transportmittel (20, 30) und
Übertragen der dritten Informationen und vorbestimmter Kenndaten des Transportmittels über eine dem Transportmittel zugeordnete lokale Überwachungseinrichtung (25) zur zentralen Einrichtung (50).

3. Verfahren nach Anspruch 2,
dadurch gekennzeichnet, daß
die ersten, zweiten und/oder dritten Informationen zu vorbestimmten Zeitpunkten oder kontinuierlich erfasst, in den jeweiligen lokalen Überwachungseinrichtungen (15, 25) gespeichert und zur zentralen Einrichtung (50) übertragen werden.

4. Verfahren nach einem der Ansprüche 1 bis 3,
dadurch gekennzeichnet, daß
die ersten und zweiten Informationen eine Ein- und Ausbuchungszeit an der jeweiligen lokalen Überwachungseinrichtung (15), die aktuelle Zeit sowie Art, Menge und die aktuelle Umgebungstemperatur der Waren enthalten.

5. Verfahren nach Anspruch 2,
dadurch gekennzeichnet, daß
die dritten Informationen die Zeit zum Ein- und Ausbuchen an der lokalen Überwachungseinrichtung (25) des Transportmittels (20, 30), die aktuelle Zeit, einen augenblicklichen Aufenthaltsort des Transportmittels sowie Art, Menge und die aktuelle Umgebungstemperatur der Waren enthalten.

6. Verfahren nach einem der Ansprüche 1 bis 5,
dadurch gekennzeichnet, daß
die aktuelle Umgebungstemperatur der Waren mit einem vorbestimmten Sollwert verglichen wird, und daß beim Abweichen der aktuellen Umgebungstemperatur vom Sollwert wenigstens eine vorbestimmte Sicherheitsfunktion ausgelöst wird.

7. Verfahren nach Anspruch 6,
dadurch gekennzeichnet, daß
das Abweichen der aktuellen Umgebungstemperatur vom Sollwert in der jeweiligen lokalen Überwachungseinrichtung (15, 25) und/oder in der zentralen Einrichtung (50) protokolliert wird.

8. Verfahren nach einem der Ansprüche 1 bis 7,
dadurch gekennzeichnet, daß
Zustandsdaten über den Ursprungsort (10), den Bestimmungsort (40) und das Transportmittel (20, 30) erfasst und in der jeweiligen lokalen Überwachungseinrichtung (15, 25) und/oder in der zentralen Einrichtung (50) ausgewertet werden.

9. Verfahren nach einem der Ansprüche 1 bis 8,
gekennzeichnet durch folgende Schritte:
Übergabe der zu transportierenden Waren von dem ersten Transportmittel (20) zu wenigstens einem weiteren Transportmittel (30);
Ausbuchen der zu transportierenden Waren aus der lokalen Überwachungseinrichtung (25) des ersten Transportmittels (20);
Übertragen der Ausbuchungszeit zur zentralen Einrichtung (50);
Erfassen vierter Informationen über die zu transportierenden Waren in wenigstens dem einen weiteren Transportmittel (30) und Übertragen dieser Informationen und vorbestimmter Kenndaten des weiteren Transporttmittels über eine dem weiteren Transportmittel zugeordnete lokale Überwachungseinrichtung (25) zur zentralen Einrichtung (50); und
Protokollieren der Übergabe der zu transportierenden Waren vom ersten zum weiteren Transportmittel in der lokalen Überwachungseinrichtung (25) des ersten und des weiteren Transportmittels (20, 30) und/oder in der zentralen Einrichtung (50).

10. Verfahren nach einem der Ansprüche 1 bis 9,
dadurch gekennzeichnet, daß die in der zentralen Einrichtung (50) gespeicherten Informationen und Daten auf einer Anzeigeeinrichtung (180) dargestellt werden.

11. System, insbesondere zur Durchführung des Verfahrens zur automatisierten Überwachung von Warenflüssen,
insbesondere von Kühl- und Tiefkühlwaren, nach einem der Ansprüche 1 bis 10, mit
einer ersten einem Ursprungsort (10) zugeordneten lokalen Überwachungseinrichtung (15),
wenigstens einer zweiten lokalen Überwachungseinrichtung (15), die einem Bestimmungsort (40) zugeordnet ist,
wenigstens einer dritten lokalen Überwachungseinrichtung (25), wobei wenigstens einem Transportmittel (20, 30) jeweils eine dritte lokale Überwachurigseinrichtung (25) zugeordnet ist, und
wenigstens einer zentralen Einrichtung (50), die mit den lokalen Überwachungseinrichtungen (15, 25) insbesondere zum Austausch von Daten und Befehlen verbunden ist, wobei jede lokale Überwachungseinrichtung (15, 25) eine Sende-/Empfangseinrichtung (150) und einen Speicher (100) aufweist sowie mit wenigstens einem Detektor (110, 130, 140) zum Erfassen einer vorbestimmten Information über die zu transportierenden und/oder an einem Bestimmungsort angekommenen Waren verbunden ist, und wobei der zentralen Einrichtung (50) ein Speicher (200) und eine Sende-/Empfangseinrichtung zugeordnet ist.

12. System nach Anspruch 11,
dadurch gekennzeichnet, daß
jeder lokalen Überwachungseinrichtung (15, 25) ein Temperatur-Meßfühler (110) zum Ermitteln der Umgebungstemperatur der zu transportierenden Waren und eine Leseeinrichtung (120) zum Erkennen der Art und Menge der zu transportierenden Waren zugeordnet ist, und daß der lokalen Überwachungseinrichtung (25) des Transportmittels (20, 30) ein Funk-Empfänger (250) zur Bestimmung des augenblicklichen Aufenthaltsortes des Transportmittels (20, 30) zugeordnet ist.

13. System nach Anspruch 11 oder 12,
dadurch gekennzeichnet, daß
jede lokale Überwachungseinrichtung (15, 25) und/oder die zentrale Einrichtung (50) zum Vergleichen der gemessenen Umgebungstemperatur mit einem vorbestimmten Sollwert ausgebildet ist.

14. System nach einem der Ansprüche 11 bis 13,
dadurch gekennzeichnet, daß
jeder lokalen Überwachungseinrichtung (15, 25) wenigstens ein Aktor zum Auslösen einer vorbestimmten Funktion zugeordnet ist.

15. System nach Anspruch 11 bis 14,
dadurch gekennzeichnet, daß
jede lokale Überwachungseinrichtung (15, 25) die ihr zugeordneten Detektoren zu vorbestimmten Zeitpunkten oder kontinuierlich aktiviert und die erfassten Daten im jeweiligen Speicher (100) ablegt und zur zentralen Einrichtung (50) überträgt.

16. System nach einem der Ansprüche 11 bis 15,
dadurch gekennzeichnet, daß
der ersten und zweiten lokalen Überwachungseinrichtung (15) eine Einrichtung zum Überwachen und Steuern von Zuständen eines Gebäudes zugeordnet ist.

17. System nach einem der Ansprüche 11 bis 16,
dadurch gekennzeichnet, daß
jeder lokalen Überwachungseinrichtung (15, 25) und der zentralen Einrichtung (50) eine Ausgabeeinrichtung (80), eine Anzeigeeinrichtung und ein Bedienfeld (90) zugeordnet ist.
